# EUROPEAN PATENT SPECIFICATION

(11) **EP 2 148 258 B1**
(45) Date of publication and mention of the grant of the patent: **28.09.2011**
(21) Application number: 08740723.5
(22) Date of filing: 21.04.2008
(51) Int. Cl.: G05B 19/4069, G05B 19/4097

(54) **SIMULATION OR MODELING METHOD OF CUTTING, PROGRAM FOR THAT METHOD, AND MEDIUM RECORDING THAT PROGRAM**
SIMULATION ODER MODELLIERUNG EINES SCHNEIDEVERFAHRENS, PROGRAMM FÜR DIESES VERFAHREN UND MEDIUM ZUR AUFZEICHNUNG DIESES PROGRAMMS
PROCÉDÉ DE SIMULATION OU DE MODÉLISATION D'UN PROCÉDÉ DE DÉCOUPE, PROGRAMME DE CE PROCÉDÉ, ET SUPPORT ENREGISTRANT CE PROGRAMME

(30) Priority: 17.05.2007 JP 2007131224
(43) Date of publication of application: 27.01.2010
(73) Proprietor: Sato, Masaki, Setagaya-ku Tokyo 157-0061 (JP)
(72) Inventor: Sato, Masaki, Setagaya-ku Tokyo 157-0061 (JP)
(74) Representative: Le Forestier, Eric
(86) International application number: PCT/JP2008/057681
(87) International publication number: WO 2008/142935

(56) References cited:
- EP-A1- 1 431 850
- EP-A2- 1 229 463
- JP-A- 11 254 379
- JP-A- 2005 292 914
- WALSTRA W H ET AL: "Interactive simulation of robot milling for rapid shape prototyping" COMPUTERS AND GRAPHICS, ELSEVIER, GB LNKD- DOI:10.1016/0097-8493(94)90013-2, vol. 18, no. 6, 1 November 1994 (1994-11-01), pages 861-871, XP026650020 ISSN: 0097-8493 [retrieved on 1994-11-01]
- ILUSHIN O ET AL: "Precise global collision detection in multi-axis NC-machining" COMPUTER AIDED DESIGN, ELSEVIER PUBLISHERS BV., BARKING, GB LNKD- DOI:10.1016/J.CAD.2004.09.018, vol. 37, no. 9, 1 August 2005 (2005-08-01) , pages 909-920, XP004823078 ISSN: 0010-4485
- YONEKAWA K., KOBORI K., KUTSUWA T.: 'Kukan Bunkatsu Model o Mochiita Keijo Modeler (A GEOMETRIC MODELER BY USING SPATIAL-PARTITIONING REPRESENTATIONS)' TRANSACTIONS OF INFORMATION PROCESSING SOCIETY OF JAPAN vol. 37, no. 1, January 1996, pages 60 - 69, XP002962912
- OZAKI H.: 'Manipulator no Shogaibutsu Kaihi' JOURNAL OF THE ROBOTICS SOCIETY OF JAPAN vol. 2, no. 6, December 1984, page 586, XP580

## Description

### TECHNICAL FIELD

It is possible to apply the present invention to, for example, simulation of cutting processing and modeling of a three-dimensional form. The present invention is made so as sequentially to divide voxels and represent a work or an object of processing as a set of voxels, and can represent even an undercut portion by representing voxels that change in form, according to progress of cutting processing or according to user operation, with polygons, whereby it is possible to represent a form of a work smoothly using simplified processing.

### BACKGROUND ART

Conventionally, in a die manufacturing process, after creating form data indicating an external form of a working target using CAD/CAM, for example by applying the technique disclosed in Japanese Unexamined Patent Application Publication No. H8-123526, data of a tool locus indicating a tool locus at a time of die processing can be created, and from this tool locus data, NC data driving an NC device for cutting machining is created. In this series of processing, during a die manufacturing process, a form of a work changing as a result of cutting machining is displayed by way of cutting machining simulation, whereby it is possible to confirm the cutting process in advance.

Here, in the cutting processing simulation, conventionally, such methods as a Z-map method, a B-Reps method, and a voxel modeling method have been used. Here, the Z-map method is a method of generating a work form during processing, based on form data of a working target and tool locus data, at each point of cutting processing for each pair of X and Y coordinates, by detecting a coordinate with the largest valve on the Z axis from the Z coordinates of the working target and the tool tip. On the other hand, the B-Reps method is a method of representing work at each point in cutting processing by polygons based on form data of a working target and tool locus data. The voxel modeling method is a method of representing a work by a set of voxels, which are blocks of cubic form.

Of these method, the Z-map method has a problem in that representing an undercut portion, a face flat on the Z axis, or the like is difficult. On the other hand, in the B-Reps method and the voxel modeling method, these problems with the Z-map method are solved. However, with the B-Reps method, there is the problem in that excessive arithmetic processing is necessary in the generation of polygons. On the other hand, in the voxel modeling method, there is the problem that, while processing is simplified, a work form cannot be represented smoothly.

In the technical field, it is known a Japanese Unexamined Patent Application Publication No. H8-123526.

It is also known the following documents:
- WALSTRA W H et al «Interactive simulation of robot miling for rapid shape prototyping» COMPUTER AND GRAPHICS, ELSEVIER,
- ILUSHIN O et al «Precise global collision detection in multi-axis NC-machining" COMPUTER AIDED DESIGN, ELSEVIER,
- EP1 2229 463.

However no one of these documents discloses a method that allows representation even of undercut portions and the like using simplified processing, by providing a method capable of smoothly representing a work form.

### DISCLOSURE OF THE INVENTION

### Problems to be Solved by the invention

The present invention ways created in consideration of the above-mentioned points, in order to enable representation even of undercut portions and the like using simplified processing, by providing a simulation method, a program for the simulation method, and a recording medium recording the program for the simulation method for cutting processing; and a modeling method, a program for the modeling method, and a recording medium recording the program for the modeling method using this technique, capable of smoothly representing a work form.

### Means for Solving the Problems

In order to solve the above-mentioned problem, the invention according to a first aspect applies a simulation method of cutting processing according to annexed claim 1.

Furthermore, the invention according to a third aspect applies to a program of a simulation method of cutting processing according to claim 1.

In addition, in the invention according to a fourth aspect, the program of the simulation method applies to a recording medium recording the program for the simulation method of cutting processing according to claim 1.

Furthermore, the invention According to a fifth aspect is actuated by an operation of a user, applies a modeling method creating a three-dimensional object form according to annexed claim 5.

Also, the invention according to a sixth aspect applies to a program of a modeling method creating a three-dimensional object form upon actuation by an operation of a user, according to claim 5.

In addition, in the invention according to a seventh aspect, the program of the modeling method applies to a recording medium recording the program for the modeling method creating a three-dimensional object form upon actuation by an operation of a user, according to claim 5.

According to the configuration of any one of the first or third to fourth aspects, by cyclically repeating in sequence a step of tool movement, a step of voxel division, a step of voxel removal, a step of polygonization, and a step of display, it is possible sequentially to divide voxels and suitably to remove thereof by progression in cutting processing, and to display a form of a work at each point in cutting processing. Therefore, it is possible to represent even undercut portions and the like, and to display a simulated image of cutting processing by simplified arithmetic processing. Furthermore, in this series of processing, it is possible smoothly to represent a work form by representing a form processed by cutting processing as polygons according to the step of polygonization.

In addition, according to the configuration of the fifth to seventh aspects, it is possible to represent even undercut portions and the like, and sequentially to represent a form of a target object by cyclically repeating in sequence a step of voxel division, a step of voxel removal, and a step of polygonization. Furthermore, in this series of processing, by representing a form processed by cutting processing as polygons according to the step of polygonization, it is possible smoothly to represent a work form.

### Effects of the Invention

According to the present invention, it is possible to represent even undercut portions and the like, and therefore, a work form can be smoothly represented by simplified processing. In addition, a modeling method, program for the modeling method, and recording medium recording the program for the modeling method using this technique can be provided.

### BRIEF DESCRIPTION OF THE DRAWINGS

FIG. 1 is a flowchart showing a processing procedure of a computer in this simulation of cutting processing according to a first embodiment of the present invention;
FIG. 2 is a block diagram showing a CAM system according to a first embodiment of the present invention;
FIG.3 is a schematic diagram showing the initialization of the procedure in FIG. 1;
FIG.4 is a schematic diagram showing for voxel division of the procedure in FIG. 1;
FIG.5 is a schematic diagram showing the conitinuous procedure in FIG. 5;
FIG.6 is a schematic diagram showing for polygonization of the procedure in FIG. 1; and
FIG.7 is a schematic diagram showing a example of work.

### PREFERRED MODE FOR CARRYING OUT THE INVENTION

Hereinafter, embodiments of the present invention are described in detail with reference to the diagrams where suitable.

### First Embodiment

### (1) Configuration of the Embodiment

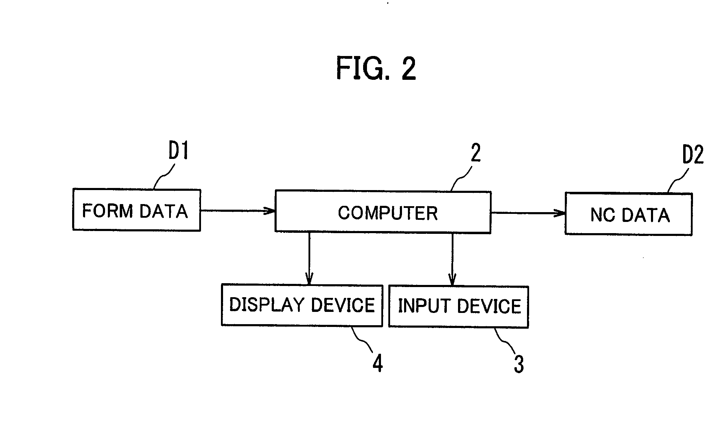

FIG. 2 is a block diagram showing a CAM system according to a first embodiment of the present invention. On this CAM system 1, form data D1 of a working target are created by a CAD system, not shown, and these form data D1 are provided to a computer 2 online or through various recording media. It should be noted that there are also cases in which the form data D1 are created using the computer 2 constituting this CAM system.

According to an instruction of an operator using an input device 3 such as a keyboard or mouse, the computer 2 executes a predetermined program, whereby a form of a working target according to these form data D1 is displayed on a display device 4. Furthermore, based on these form data 1 and tools designated by the operator, for example, data of a tool locus of contour cutting processing are created. In addition, a simulation of cutting processing according to the created data of the tool locus is executed, and a work form that successively changes as a result of cutting processing is displayed on the display device 4. Furthermore, according to these created data of the tool locus, NC data D2, which are control data of the cutting processing device, are created and output.

It should be noted that, while the program for this computer 2 is recorded and provided on various recording media such as an optical disc, it can be provided by downloading through a network such as the Internet, and can additionally be provided by installation beforehand on the computer 2.

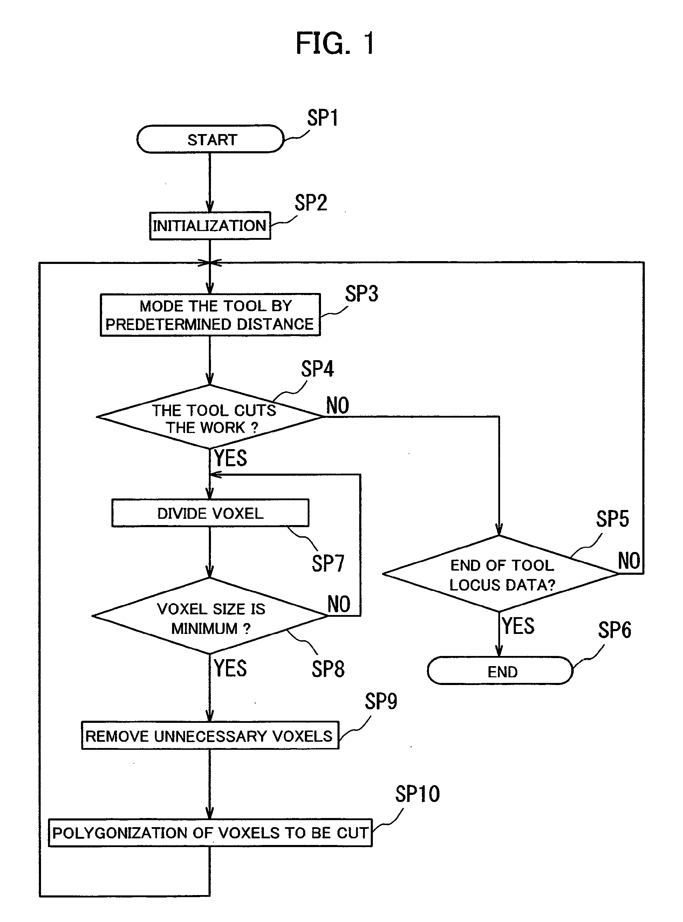

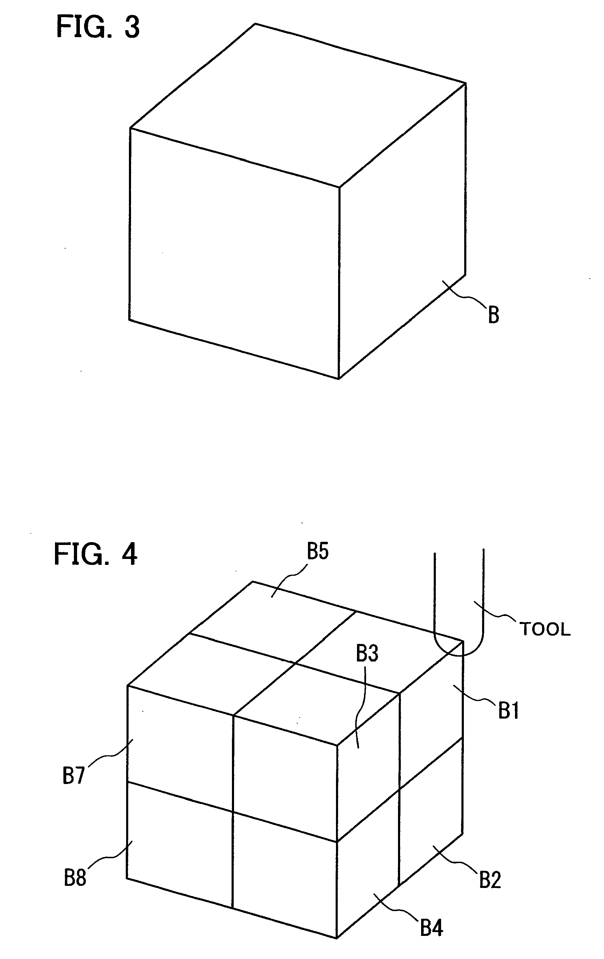

FIG. 1 is a flowchart showing a processing procedure of the computer 2 in this simulation of cutting processing. When the operator instructs simulation of cutting processing, the computer 2 begins this processing procedure and transitions from Step SP1 to Step SP2. Here, the computer 2 performs initialization processing, obtains coordinate data of each vertex defining a voxel from data of cutting processing conditions associated with data of a tool locus, and thereby represents a work for cutting processing as one voxel B, as shown in FIG. 3. It should be noted that these data of cutting processing conditions are such data as work size, type of tool applied to cutting processing, and tool radius. The computer 2 performs rendering processing on this voxel B according to a perspective, light source, and the like specified by the operator, and displays thereof on the display device 4. Furthermore, the computer 2 accepts input of a minimum size of a voxel to divide and generate according to this initialization processing. It should be noted that this minimum voxel size can be automatically created from data of a tool locus. More specifically, as a method for automatic creation, for example, in a case of data of a tool locus being data of contour cutting processing, a case in which the pitch of the z-axis direction of this contour is set to be a length of one side or the like can be considered.

Next, the computer 2 transitions to Step SP3, and here, based on data of a tool locus, moves the tool a predetermined distance for the work generated in Step SP2. Furthermore, in the following Step SP4, it is determined whether the tool has cut the work according to movement of the tool in Step SP3. It should be noted that this determination method can be applied to various determination methods for tool interference.

Here, if a negative result is obtained in Step SP4, the computer 2 transitions from Step SP4 to Step SP5, determines data of a tool locus, and determines whether the simulation of cutting processing has completed. Here, if a negative result is obtained, the computer 2 returns from Step SP5 to Step SP3, and on the other hand, if a positive result is obtained in Step SP5, transitions from Step SP5 to Step SP6, and completes this processing procedure.

As a result, the computer 2 moves the tool a predetermined distance at each time based on data of the tool locus, and repeats a determination of whether to cut the work. It should be noted here that, this predetermined distance can be, for example, set by input of an operator, or that a grid-point set on a work as a length of one side of a minimum voxel, according to initialization settings of Step SP2, can be set as a unit thereof.

Here, if a positive result is obtained in Step S4, the computer 2 transitions from Step SP4 to Step SP7. Here, the computer 2 partitions voxels of a point which the tool cuts into two in each coordinate direction. Therefore, for example, as shown in FIG. 4 by comparison with FIG. 3, in a case in which only one voxel B has been set by initialization, the computer 2 partitions this one voxel B equally in each of the directions X, Y, and Z, and generates eight voxels B1 to B8.

Next, the computer 2 transitions from Step SP7 to Step SP8, and according to a similar determination technique as in Step SP4, detects the voxel to be cut by a tool from among the voxels B1 to B8 generated in Step SP7. It should be noted here that, in the example of FIG. 4, voxel B1 has been detected as the voxel to be cut by the tool. The computer 2 determines whether this detected voxel B1 is of the minimum size set at the initialization processing of Step SP2, and if a negative result is obtained here, returns to Step SP7.

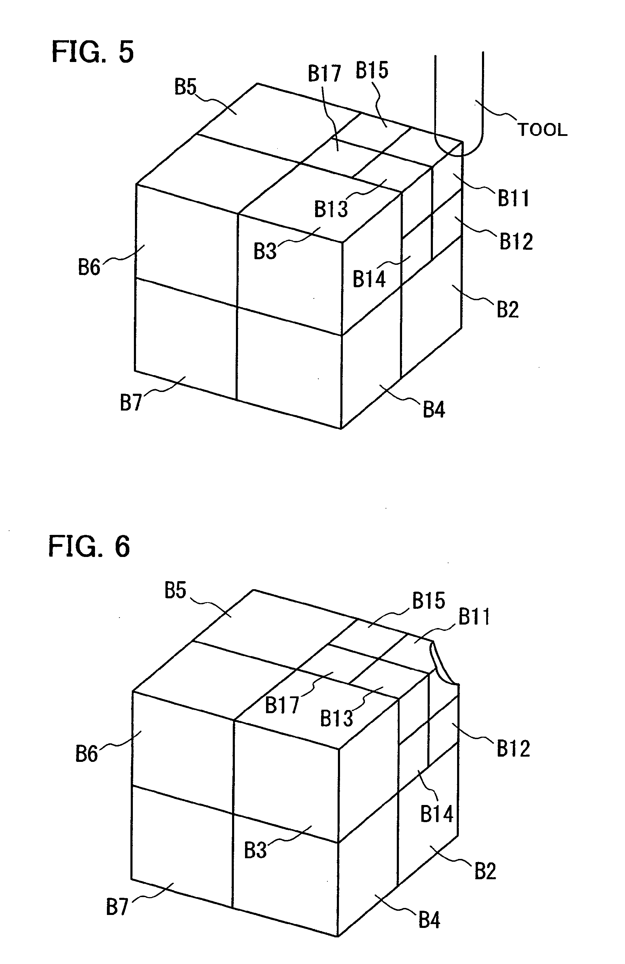

As a result, the computer 2, as shown in FIG. 5, further equally partitions the voxel B1 in contact with the tool in each of the X, Y, and Z directions, generating voxels B11 to B18. The computer 2 sequentially partitions voxels in contact with the tool in this manner, and when a size of a voxel becomes the minimum size set in Step SP2, by obtaining a positive result in Step SP8, transitions to Step SP9.

Here, the computer 2 sets a voxel that has become of minimum size as a result of processing of the immediately prior Step SP7 as a target of processing, detects voxels to be cut and removed by movement of a tool in Step SP3 from voxels of the target of processing, and removes these detected voxels from the work. Furthermore, in the following Step SP10, voxels to be cut by the tool are detected from among the remaining voxels of the target of processing. In addition, as shown in FIG. 6, by comparison with FIG. 5, the form after cutting of this detected voxel B11 is replaced to be represented by polygons. When representing the form after cutting with these polygons, the computer 2 represents the form after cutting by setting the number of polygons so as to be of sufficient practical smoothness in order to display the work on the display device 4 so as to be visually recognizable. It should be noted that various forms can be applied to polygon figuration.

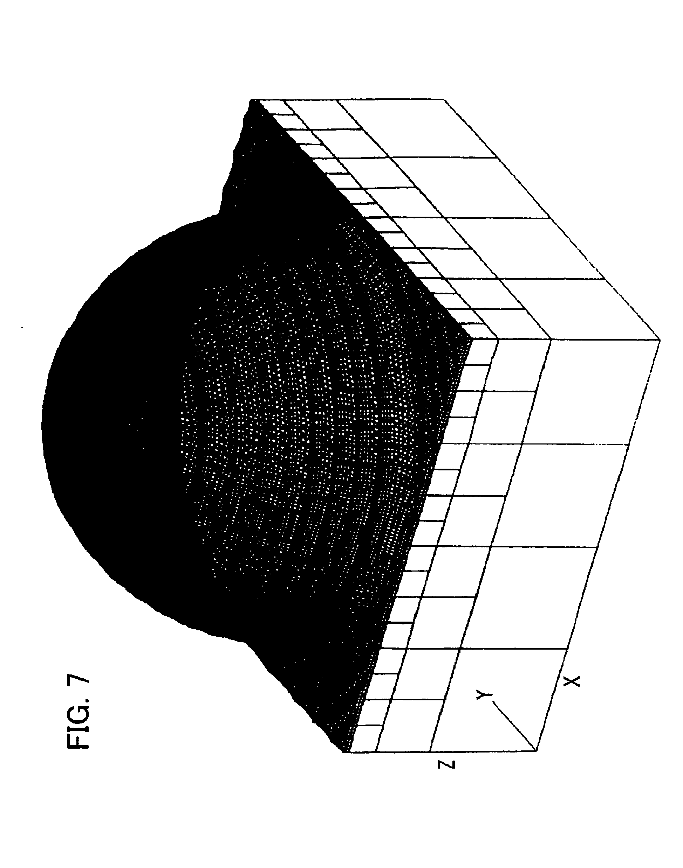

After display on the display device 4 has been switched after performing rendering processing on the form of the work in which a part has been polygonized from a set of voxels as a result of the processing in Step SP10, the computer 2 returns to Step SP3, and the tool is further moved by only a predetermined distance. As a result, while moving the tool by a predetermined distance each time according to data of a tool locus, the computer 2 displays a form of the work at each movement position on the display device 4, and provides a simulated image after cutting to the operator. As a result, the computer 2 represents a work form by voxels and polygons as shown in FIG. 7. It should be noted that this is an example of displaying a work form in a case in which a semispherical form is to be roughly processed by contour cutting processing.

Moreover, as a result of this, in a case of repeating Steps SP9 to SP10 after first setting polygons for a work, the computer 2 sets voxels and polygons as targets of processing, detects and removes polygons and voxels to be cut and removed from the work, as a result of movement of the tool in Step SP3, and replaces a form after cutting to be represented with polygons.

### (2) Operation of the Embodiment

In the above-mentioned configuration, on this CAM system 1, data of a tool locus according to contour cutting processing and the like are created using form data D1 created by CAD, and NC data D2 are created according to these data of the tool locus. When creating these NC data D2, a simulation of cutting processing is performed by the computer 2, and a form of a work sequentially changing as a result of cutting processing is displayed on the display device 4. As a result, in this CAM system 1, before actually performing cutting processing on a work, it is possible to confirm visually a visual aspect of cutting processing beforehand.

In this CAM system 1, regarding this simulation of cutting processing, a work is represented by one voxel, and as a result of sequentially dividing this voxel and sequentially removing voxels to be removed by cutting processing, as with the case of simulation of cutting processing according to the voxel modeling method, it is possible to display a work form even for an undercut portion or a face planar in the z-axis direction using simplified processing.

Furthermore, at this time, a voxel which the tool contacts is detected, and by dividing this voxel, it is possible to limit the number of voxels to divide to a minimum required level. As a result, it is possible to reduce the amount of arithmetic processing and to simplify processing.

However, just by simply sequentially dividing voxels and sequentially removing voxels to be removed as a result of cutting processing, it is not possible to represent smoothly a work form. Therefore, in this CAM system 1, a form after cutting of voxels to be cut as a result of movement of the tool is replaced to be represented by polygons. As a result, in the present embodiment, it is possible to represent a form of a work by voxels and polygons, whereby the work form can be represented smoothly.

### (3) Effects of the Embodiment

According to the above-mentioned configuration, by sequentially dividing voxels and representing a work as a set of voxels, voxels changing in form as a result of cutting processing can be represented by polygons, and thus, by enabling representation even of an undercut portions and the like, it is possible to represent smoothly a work form using simplified processing.

### Second Embodiment

According to the present embodiment, the present invention is applied to machining and finishing processing, and has a work roughly processed according to the technique of the first embodiment as an object thereof. Here, except for the point in which initialization processing differs, the computer of the present embodiment performs processing of a simulation by performing the processing procedure of FIG. 1 similarly to the computer 2 of the first embodiment.

Here, the computer of the present embodiment performs the processing procedure of FIG. 1 according to the start of simulation of this machining and finishing processing. This computer, in the initialization of Step SP2 according to FIG. 1, omits initialization processing for the work, and sets a work represented by polygons and voxels according to the simulation of the first embodiment as a target of processing. In addition, in order to accommodate the tool for machining and finishing processing, a setting for a minimum size of a voxel is accepted, and furthermore, a minimum size for this voxel is automatically set.

According to the present embodiment, it is possible to apply the invention to simulation of machining and finishing processing, and even in a case of a simulation in which a work represented as voxels and polygons is set as a target of processing, a similar effect as that of the first embodiment can be obtained.

### Third Embodiment

According to the present embodiment, a simulation of cutting processing is performed on a work represented by polygons and the like as a target. It should be noted that the work represented by these polygons and the like here, with regard to the background technology described in Background of the Invention, for example, is a display target created by a simulation of the above-described conventional technique.

As a result, the computer according to the present embodiment begins the processing procedure of FIG. 1 upon starting the processing of this simulation. Furthermore, in the initialization processing of Step SP2 of the processing procedure of FIG. 1, a work represented by these polygons and the like is represented by voxels and polygons. In addition, thereafter, the processing procedure of Steps SP3 to SP10 of FIG. 1 is performed sequentially.

Here, processing that represents a work of this target of processing using voxels and polygons is performed by defining one voxel including the work of this target of processing from maximum and minimum values in the X, Y, and Z directions of the work of the target of processing, and thereafter dividing this voxel sequentially and removing unnecessary voxels thereof, and representing voxels divided until the minimum size using polygons.

According to the present embodiment, in initialization processing, by re-representing a work represented by polygons and the like using voxels and polygons, it is possible to obtain a similar effect as that of the first embodiment using data used in processing of various simulations.

### Fourth Embodiment

In the present embodiment, the present invention is applied to modeling processing of a three-dimensional form. That is to say, the computer of the present embodiment is actuated by an operation of the user in accepting input of a size of a target of processing, and creates a voxel according to this size. Furthermore, this computer displays this voxel, and accepts a selection of a tool for cutting processing of the target of processing displayed according to this voxel. It should be noted that, in this case, the target of processing may be represented as voxels and polygons.

Here, in the present embodiment, as a selectable tool, a cutter that cuts the target of processing, and a planar and router that polishes the target of processing and the like are provided. If a user selects a cutting tool, the computer accepts a designation of a cutting place on a display screen. On the other hand, if the user selects the router, the router icon is displayed and, actuated by an operation of a mouse by the user, the computer accepts input of an amount of polishing, portion for polishing, and the like. In addition, if the user selects the planar, similarly, input of a portion for applying the planar and input of an amount of application of the planar by the user are accepted.

Upon accepting input of a processing place, processing amount, or the like from the user in this manner, similarly to that described above in regard to the first embodiment, the computer removes unnecessary voxels while sequentially dividing voxels in accordance with this input, and displays the voxels most divided by representation using polygons. Furthermore, actuated by an operation of the user, the computer repeats this series of processing.

As a result, the computer sequentially changes and displays a form of the target of processing represented by voxels just as in a case of processing the target of processing of a three-dimensional form using a cutter or the like. Furthermore, when the user instructs to revert to the original, the display is reverted to a state previous to processing immediately before.

If the user instructs storage of the form, the computer stores form data according to the three-dimensional form created in this manner, in the format specified by the user.

As in the present embodiment, even if applied to modeling processing of a three-dimensional form, a smooth form can be represented similarly to that in the above-described embodiment.

### Fifth Embodiment

It should be noted that, in the above-described first embodiment, a case of representing a work according to processing of initialization by one voxel is described; however, the present invention is not limited thereto, and may represent a work using a plurality of sets of voxels beforehand as necessary.

Furthermore, in the above-described first embodiment, a case of applying the present invention to simulation of cutting processing in die processing is described; however, the present invention is not limited thereto, and can widely be applied to various simulations of cutting processing.

### INDUSTRIAL APPLICABILITY

The present invention can be applied to a CAM system in application to die processing and the like.

## Claims

1. A simulation method of cutting processing which displays a form of a work that sequentially changes by cutting processing based on data of a tool locus, the method cyclically repeating in sequence:
a step of tool movement (SP3); a step of voxel division (SP7) a step of voxel removal (SP9); a step of polygonization (SP10); and a step of displaying, **characterized in that**:
the step of tool movement (SP3) is
a step in which a tool is moved by only a predetermined distance for a work represented by a voxel, or a work represented by a voxel and a polygon, based on data of the tool locus;
the step of voxel division (SP7) is
a step in which the work is represented by a set of voxels before division and divided voxels, or by a set of voxels before division and polygons and voxels after division, by moving the tool according to the step of tool movement and dividing a voxels interfering with the tool;
the step of voxel removal (SP9) is
a step in which voxels, or voxels and polygons, cut and removed by movement of the tool by the step of tool movement are detected and removed from the work wherein voxels were divided in the step of voxel division;
the step of polygonization (SP10) is
a step in which voxels, or voxels and polygons, cut by movement of the tool in the step of tool movement are detected from the work according to voxels and polygons remaining from the step of voxel removal, and a form of the detected voxels and polygons after cutting according to the step of tool movement is represented and replaced by polygons; and
the step of display is
a step in which the work according to the voxels and the polygons is displayed.

2. The simulation method of cutting processing according to claim 1, comprising:
a step of converting (SP2) a work represented by predetermined form data into a work represented by the voxel and polygon before the step of tool movement (SP3).

3. A Program for simulation method of cutting processing according to claim 1.

4. A Medium recording a program for simulation method according to claim 1.

5. A modeling method of creating a three-dimensional form actuated by an operation of a user, **characterized in that:**
according to a step of initialization (SP2), an input of a form of a target of processing is accepted, and the target of processing is represented by a voxel, or the target of processing is represented by a voxel and a polygon; and
a step of input acceptance, a step of voxel division, a step of voxel, removal, and a step of polygonization are cyclically repeated in sequence, wherein:
the step of input acceptance is
a step in which a change of form of the target of processing is accepted by actuation in an operation of the user;
the step of voxel division (SP7) is
a step in which the voxel of a portions related to a change is divided according to a change in form of the target of processing according to the step of input acceptance, and the target of processing is represented by a set of voxels before division and divided voxels, or by a set of voxels before division and polygons and voxels after division;
the step of voxel removal (SP9) is
a step in which voxels, or voxels and polygons, that have become unnecessary are detected from the target of processing in which a voxel was divided in the step of voxel division, and removed bey a change in form of the target of processing according to the step of input acceptance; and
the step of polygonization (SP10) is
a step in which voxels, or voxels and polygons, changing in form according to a change in form of the target of processing according to the step of input acceptance are detected from the target of processing according to voxels, or voxels and polygons, remaining from the step of voxel removal, and a form of the detected voxels, or voxels and polygons after the change of form is replaced to be represented by polygons.

6. A Program for modeling method of creating a three dimensional form actuated by an operation of a user according to claim 5.

7. A Medium recocording for a program for modeling method of creating a three-dimensional form actuated by an operation of a user according to claim 5.

## Patentansprüche

1. Simulationsverfahren einer Schneidebearbeitung, welches die Form eines Werkstücks darstellt, die sich fortlaufend ändert durch Schneidebearbeitung basierend auf Daten eines Werkzeugortes, wobei das Verfahren nacheinander folgende Schritte zyklisch wiederholt:
einen Schritt der Werkzeugbewegung (SP3); einen Schritt der Voxelteilung (SP7); einen Schritt der Voxelentfernung (SP9); einen Schritt der Polygonisierung (SP10); und einen Schritt der Darstellung, **dadurch gekennzeichnet, dass**
der Schritt der Werkzeugbewegung (SP3)
ein Schritt ist, in dem ein Werkzeug nur um einen vorgegebenen Abstand zu einem Werkstück bewegt wird, welches durch ein Voxel, oder durch ein Voxel und ein Polygon, repräsentiert wird, basierend auf Daten des Werkzeugortes; dass
der Schritt der Voxelteilung (SP7)
ein Schritt ist, in dem das Werkstück repräsentiert wird durch einen Satz von Voxeln vor der Teilung und geteilte Voxel, oder durch einen Satz von Voxeln vor der Teilung und Polygonen und Voxeln nach der Teilung, durch Bewegen des Werkzeugs gemäß dem Schritt der Werkzeugbewegung und Teilen eines mit dem Werkzeug interferierenden Voxels; dass
der Schritt der Voxelentfernung (SP9)
ein Schritt ist, in dem Voxel, oder Voxel und Polygone, die durch Bewegung des Werkzeugs in dem Schritt der Werkzeugbewegung geschnitten und entfernt wurden, detektiert und von dem Werkstück entfernt werden, bei dem Voxel in dem Schritt der Voxelteilung geteilt wurden; dass
der Schritt der Polygonisierung (SP10)
ein Schritt ist, in dem Voxel, oder Voxel und Polygone, die durch Bewegung des Werkzeugs in dem Schritt der Werkzeugbewegung geschnitten wurden, aus dem Werkstück detektiert werden gemäß Voxeln und Polygonen, die nach dem Schritt der Voxelentfernung verbleiben, wobei eine Form der detektierten Voxel und Polygone nach dem Schneiden gemäß dem Schritt der Werkzeugbewegung durch Polygone repräsentiert und ersetzt wird; und dass
der Schritt der Darstellung
ein Schritt ist, in dem das Werkstück gemäß den Voxeln und den Polygonen dargestellt wird.

2. Simulationsverfahren einer Schneidebearbeitung gemäß Anspruch 1, umfassend:
einen Schritt der Konvertierung (SP2) eines Werkstücks, das durch vorgegebene Formdaten repräsentiert wird, in ein Werkstück, das durch das Voxel und Polygon vor dem Schritt der Werkzeugbewegung (SP3) repräsentiert wird.

3. Programm für das Simulationsverfahren einer Schneidebearbeitung gemäß Anspruch 1.

4. Medium mit der Aufzeichnung eines Programms für das Simulationsverfahren gemäß Anspruch 1.

5. Modellierverfahren zur Erzeugung einer dreidimensionalen Form, das durch eine Bedienung eines Benutzers gesteuert wird, **dadurch gekennzeichnet, dass**
gemäß einem Schritt der Initialisierung (SP2) eine Eingabe einer Form eines Bearbeitungsziels akzeptiert wird, wobei das Bearbeitungsziel durch ein Voxel repräsentiert wird, oder wobei das Bearbeitungsziel durch ein Voxel und ein Polygon repräsentiert wird; und dass
ein Schritt der Eingabeakzeptanz, ein Schritt der Voxelteilung, ein Schritt der Voxelentfernung und ein Schritt der Polygonisierung der Reihe nach zyklisch wiederholt werden, wobei:
der Schritt der Eingabeakzeptanz
ein Schritt ist, in dem eine Formänderung des Bearbeitungsziels akzeptiert wird durch eine Steuerung in einer Bedienung des Benutzers; wobei
der Schritt der Voxelteilung (SP7)
ein Schritt ist, in dem ein Voxel eines von einer Änderung betroffenen Bereichs gemäß einer Formänderung des Bearbeitungsziels gemäß dem Schritt der Eingabeakzeptanz geteilt wird, wobei das Bearbeitungsziel repräsentiert wird durch einen Satz von Voxeln vor der Teilung und geteilten Voxeln, oder durch einen Satz von Voxeln vor der Teilung und Polygonen und Voxeln nach der Teilung; wobei
der Schritt der Voxelentfernung (SP9)
ein Schritt ist, in dem Voxel, oder Voxel und Polygone, die überflüssig geworden sind, aus dem Bearbeitungsziel detektiert werden, bei dem ein Voxel in dem Schritt der Voxelteilung geteilt wurde, und durch eine Formänderung des Bearbeitungsziels gemäß dem Schritt der Eingabeakzeptanz entfernt werden; und wobei
der Schritt der Polygonisierung (SP10)
ein Schritt ist, in dem Voxel, oder Voxel und Polygone, deren Form sich ändert gemäß der Formänderung des Bearbeitungsziels gemäß dem Schritt der Eingabeakzeptanz, aus dem Bearbeitungsziel detektiert werden gemäß Voxeln, oder Voxeln und Polygonen, die nach dem Schritt der Voxelentfernung übrig bleiben, wobei eine Form der detektierten Voxel, oder Voxel und Polygone, nach der Formänderung ersetzt wird, um durch Polygone repräsentiert zu werden.

6. Programm für ein Modellierverfahren zur Erzeugung einer dreidimensionalen Form, das durch eine Bedienung eines Benutzers gesteuert wird, gemäß Anspruch 5.

7. Medium zur Aufzeichnung eines Programms für ein Modellierverfahren zur Erzeugung einer dreidimensionalen Form, das durch eine Bedienung eines Benutzers gesteuert wird, gemäß Anspruch 5.

## Revendications

1. Procédé de simulation de traitement de découpe affichant une forme d'une pièce qui change séquentiellement par un traitement de découpe sur la base des données d'un lieu géométrique d'outil, le procédé répétant cycliquement en séquence :
une étape de déplacement d'outil (SP3) ; une étape de division de voxel (SP7) ; une étape de suppression de voxel (SP9) ; une étape de polygonisation (SP10) ; et une étape d'affichage,
**caractérisé en ce que** :
l'étape de déplacement d'outil (SP3) est une étape à laquelle un outil est déplacé seulement d'une distance prédéterminée pour une pièce représentée par un voxel, ou une pièce représentée par un voxel et un polygone, sur la base des données d'un lieu géométrique d'outil ;
l'étape de division de voxel (SP7) est une étape à laquelle la pièce est représentée par un ensemble de voxels avant la division et de voxels divisés, ou par un ensemble de voxels avant la division et de polygones et de voxels après la division, en déplaçant l'outil selon l'étape de déplacement d'outil et en divisant un voxel interférant avec l'outil ;
l'étape de suppression de voxel (SP9) est une étape à laquelle des voxels, ou des voxels et des polygones, découpés et supprimés par le déplacement de l'outil à l'étape de déplacement d'outil sont détectés et supprimés de la pièce où des voxels sont divisés à l'étape de division de voxel ;
l'étape de polygonisation (SP10) est une étape à laquelle des voxels, ou des voxels et des polygones, découpés par le déplacement de l'outil à l'étape de déplacement d'outil sont détectés à partir de la pièce en fonction des voxels et des polygones restant à l'étape de suppression de voxel, et une forme des voxels et polygones détectés après la découpe selon l'étape de déplacement d'outil est représentée et remplacée par des polygones ; et
l'étape d'affichage est une étape à laquelle la pièce en fonction des voxels et des polygones est affichée.

2. Procédé de simulation de traitement de découpe selon la revendication 1, comprenant :
une étape de conversion (SP2) d'une pièce représentée par des données de forme prédéterminée en une pièce représentée par le voxel et le polygone avant l'étape de déplacement d'outil (SP3).

3. Programme du procédé de simulation de traitement de découpe selon la revendication 1.

4. Support d'enregistrement d'un programme du procédé de simulation selon la revendication 1.

5. Procédé de modélisation destiné à créer une forme tridimensionnelle sous l'effet d'une opération d'un utilisateur, **caractérisé en ce** qui :
selon une étape d'initialisation (SP2), une entrée d'une forme d'une cible de traitement est acceptée, et la cible de traitement est représentée par un voxel, ou la cible de traitement est représentée par un voxel et un polygone ; et
une étape d'acceptation d'entrée, une étape de division de voxel, une étape de suppression de voxel, et une étape de polygonisation sont cycliquement répétées en séquence, dans lequel :
l'étape d'acceptation d'entrée est une étape à laquelle un changement de forme de la cible de traitement est accepté sous l'effet d'une opération de l'utilisateur ;
l'étape de division de voxel (SP7) est une étape à laquelle le voxel d'une partie liée à un changement est divisé en fonction d'un changement de forme de la cible de traitement selon l'étape d'acceptation d'entrée, et la cible de traitement est représentée par un ensemble de voxels avant division et de voxels divisés, ou par un ensemble de voxels avant division et de polygones et de voxels après division ;
l'étape de suppression de voxel (SP9) est une étape à laquelle des voxels, ou des voxels et des polygones, qui sont devenus inutiles sont détectés à partir de la cible de traitement où un voxel a été divisé à l'étape de division de voxel, et supprimés par un changement de forme de la cible de traitement selon l'étape d'acceptation d'entrée ; et
l'étape de polygonisation (SP10) est une étape à laquelle des voxels, ou des voxels et des polygones, changeant de forme en fonction d'un changement de forme de la cible de traitement selon l'étape d'acceptation d'entrée sont détectés à partir de la cible de traitement en fonction des voxels, ou des voxels et des polygones, restant à l'étape de suppression de voxel, et une forme des voxels détectés, ou des voxels et des polygones détectés, après le changement de forme est remplacée pour être représentée par des polygones.

6. Programme de procédé de modélisation destiné à créer une forme tridimensionnelle sous l'effet d'une opération d'un utilisateur selon la revendication 5.

7. Support d'enregistrement d'un programme de procédé de modélisation destiné à créer une forme tridimensionnelle sous l'effet d'une opération d'un utilisateur selon la revendication 5.
